# EUROPEAN PATENT SPECIFICATION

(11) **EP 2 736 243 B1**
(45) Date of publication and mention of the grant of the patent: **02.11.2016**
(21) Application number: 13005456.2
(22) Date of filing: 20.11.2013
(51) Int. Cl.: H04M 11/06, H04L 1/18

(54) **Digital subscriber line (DSL) communication system with remote back-pressure**
Digital Subscriber Line (DSL)-Kommunikationssystem mit entferntem Gegendruck
Système de communication par ligne d'abonné numérique (DSL) à contre-pression à distance

(30) Priority: 23.11.2012 US 201261729496 P; 15.11.2013 US 201314081364
(43) Date of publication of application: 28.05.2014
(73) Proprietor: Broadcom Corporation, Irvine, CA 92617 (US)
(72) Inventor: Peeters, Miguel, 1150 Brussels (BE); Cornil, Jean-Philippe, CA 92617 Irvine (US); Lamb, Lowell, San Ramon, CA 94583 (US); Christiaens, Benoit, 1082 Brussels (BE); Elmoalem, Eli, 71930 Nili Central (IL)
(74) Representative: Jehle, Volker Armin

(56) References cited:
- EP-A2- 0 912 015
- US-A1- 2003 172 220
- US-A1- 2012 243 589
- "LINK layer to PHY layer interface; G.999.1 (10/09)", ITU-T STANDARD, INTERNATIONAL TELECOMMUNICATION UNION, GENEVA ; CH, no. G.999.1 (10/09), 9 October 2009 (2009-10-09), pages 1-22, XP017467185, [retrieved on 2010-04-12]

## Description

### BACKGROUND

### Field of Disclosure

The present disclosure generally relates to flow control within communication system, including a digital subscriber line (DSL) communication system which uses remote back-pressure for flow control.

### Related Art

US2012/0243589 describes a data flow control over a DSL transmission path using the codeword AIOOS, All Idle Out-Of-Sync for requesting from a receiver side to stop data transmission at the remote transmission side. The AIOOS is triggered by the fullness of the receiver buffer.
Document "Interface between the link layer and the physical layer for digital subscriber line (DSL)", ITU-T G.999.1 (10/09) discloses an implementation of the back pressure flow control only in one direction PHY/LINK with the assumption that the data rate of the packet network is much higher than the data rate of the DSL transmission.
EP 0 912 015 A2 describes an overload control in a multiple access system comprising an access point a wireless modem and a PC connected to the wireless modem. The data flow control is implemented both in upload and download direction in the wireless modem using a flow control signal Xon/Xoff sent to stop uplink or downlink data transmission.
US2003172220 describes data control flow within a network device comprising multiple I/O ports. A pause frame is activated in the receiver of the network device if the aggregate size of the data packets received at the I/O ports exceeds a certain threshold.

Digital subscriber line (DSL) is a technology for bringing high-bandwidth information to a customer premises, such as a home or a business to provide some examples, over ordinary copper telephone lines. A conventional DSL communication system typically includes a DSL transmitter having a transmitting network processor (tx-NP) coupled to a first DSL physical layer (PHY) and a DSL receiver having a receiving network processor (rx-NP) coupled to a second DSL PHY. The conventional DSL communication system can include an asymmetric digital subscriber line (ADSL) system, a very-high-bit-rate digital subscriber line (VDSL) system, and/or a symmetrical high-speed digital subscriber line (SHDSL) system to provide some examples. Conventionally, the tx-NP provides one or more packets of information to the first DSL PHY at a first rate and the first DSL PHY converts the one or more packets of information into a continuous bit stream for transmission to the second DSL PHY at a second rate. Thereafter, the second DSL PHY converts the received bit stream into one or more packets of information for transmission to the rx-NP at a third rate. Conventionally, the first rate, the second rate, and the third rate are different with the first rate being the fastest rate and the second rate being the slowest rate.

Flow control is a process of managing a rate of data transmission between two nodes to prevent a faster node, such as a NP in either the DSL transmitter or DSL receiver, from overwhelming a slower node, such as a DSL PHY in either the DSL transmitter or DSL receiver. In a conventional DSL system, flow control between the NP and the DSL PHY is implemented using a blocking mode, also referred to as back-pressure flow control, for traffic from the NP to the first DSL PHY and by using a non-blocking mode for traffic between the DSL PHYs. In the conventional DSL system, the DSL PHY is assumed to be a bottleneck for traffic, namely, the NP provides its traffic to the DSL PHY at a much higher rate than the DSL PHY can provide its traffic. For example, the NP can provide traffic to the DSL PHY at a rate of 100Mbps and the DSL PHY can transmit the traffic at a rate of only 15 Mbps to another DSL PHY or a rate of only 60 Mbps to the NP.

The DSL transmitter and the DSL receiver conventionally include a packet interface between their respective NPs and DSL PHYs. A conventional example of this packet interface is described in Recommendation ITU-T G.999.1, entitled "Interface between the link layer and the physical layer for digital subscriber line (DSL) transceivers," (G.999.1 Standard). The G.999.1 Standard defines a conventional point-to-point packet interface between the NP and the DSL PHY when the DSL PHY is supporting multiple DSL lines. In this conventional point-to-point packet interface, the back-pressure flow control between the NP and the DSL PHY is implemented by using a special indication, referred to as an Xon/Xoff signal, that is set by the DSL PHY to indicate that it is capable of receiving a packet, namely Xon, or not capable of receiving the packet, namely Xoff.

In more recent versions of DSL, the DSL PHY can no longer be assumed to be a bottleneck for the traffic, namely the NP provides its traffic to the DSL PHY at a substantially similar rate as the DSL PHY provides its traffic. For example, there are situations where the NP is interfacing with a multi-port DSL device having multiple DSL PHYs. The multi-port DSL device aggregates traffic from multiple DSL lines toward a wide area network (WAN) or a local area network (LAN) via multiple lower rate DSL links. In these situations, a WAN/LAN line rate is considerably lower than an aggregate rate of the multi-port DSL device. Moreover, in a situation where link capacity is shared, such as in a passive optical network (PON), the WAN/LAN line rate fluctuates as a result of dynamic bandwidth allocation by a centralized system, such as an optical line terminal (OLT) in the PON. The new coming DSL standard, G.Fast, is an example where an aggregate data rate of the multi-port DSL device can largely exceed the WAN/LAN line rate.

### BRIEF SUMMARY OF THE INVENTION

According to one aspect, a digital subscriber line, DSL, receiver is provided, comprising:
a receiving network processor (410) configured to provide flow control information (450) to indicate whether it is capable of receiving a data packet;
a DSL physical layer, PHY, (412) configured to receive the flow control information (450) from the receiving network processor (410) and to provide the data packet to the receiving network processor (410) when the receiving network processor (410) is capable of receiving the data packet, wherein the DSL PHY (412) is further configured to receive a re-transmission unit, RU, (156) from a DSL transmitter (402), to generate the data packet from the RU (156); and
an acknowledgement-transmitter, ACK TX, module (420) configured to provide an acknowledgement message (452) to the DSL transmitter (402) upon receipt of the RU (156),
wherein the acknowledgement message (452) includes the flow control information (450), an acknowledgment of RUs (156) that have been received, and an indication whether the receiving network processor (410) is capable of receiving the data packet.

Advantageously the DSL PHY (412) is further configured to receive the RU (156) at a first rate, wherein the receiving network processor (410) is configured to provide the data packet to a communication device (318, 320, 322, 324) or a network (206) at a second rate, and wherein the first rate is greater than the second rate.

Advantageously, the DSL PHY (412) comprises:
a receiver re-transmission, RTX RX, module (126, 506) configured to process the RU (156) to provide a continuous bit stream (160); and
a receiver transport protocol specific transmission convergence, TPS- TC RX, module (128) configured to process the continuous bit stream (160) to provide the data packet.

Advantageously, the acknowledgement message (452) includes a field having a bit that is settable to indicate whether the receiving network processor (410) is capable of receiving the data packet.

Advantageously, the RTX RX module (126, 506) comprises:
a memory (508) configured to store the RU (156) when the receiving network processor (410) is not capable of receiving the data packet.

Advantageously, receiving network processor (410) is further configured to provide the flow control information (450) to a DSL transmitter (402) indicating whether the receiving network processor (410) is capable of receiving the data packet.

According to an aspect, a digital subscriber line, DSL, transmitter, comprises:
an acknowledgement-receiver, ACK RX, module configured to receive an acknowledgement message (452) from a DSL receiver (408, 502), the acknowledgement message (452) including flow control information (450) indicating whether the DSL receiver (408, 502) is capable of receiving a re-transmission unit, RU, an acknowledgment of RUs (156) that have been received at the DSL receiver (408, 502);
   and
a transmitter re-transmission, RTX TX, module configured to provide the RU (156) to the DSL receiver (408, 502) when the DSL receiver (408, 502) is capable of receiving the RU (156).

Advantageously, the RTX TX module is configured to provide the RU (156) to the DSL receiver (408, 502) when a receiving network processor (410) within the DSL receiver (408, 502) is capable of receiving a data packet.

Advantageously, the acknowledgement message (452) further indicates whether a previous RU (156) has been received by the DSL receiver (408, 502).

Advantageously, the DSL transmitter further comprises:
a transmitting network processor (402) configured to receive the flow control information (450) and to provide the data packet when the flow control information (450) indicates the DSL receiver (408, 502) is capable of receiving the RU (156).

Advantageously, the DSL transmitter further comprises:
a transmitter transport protocol specific transmission convergence, TPS-TC TX, module configured to receive the flow control information (450) and to convert the data packet into a continuous bit stream (152) when the flow control information (450) indicates the DSL receiver (408, 502) is capable of receiving the RU (156).

According to an aspect, a method is provided for implementing a remote back- pressure flow control within a digital subscriber line, DSL, communication system, comprising:
providing, by a DSL receiver (408, 502), flow control information (450) to indicate whether the DSL receiver (408, 502) is capable of receiving a data packet;
transmitting, by the DSL receiver (408, 502), an acknowledgment message (452) to a DSL transmitter (402) to include the flow control information (450), an acknowledgment of receiving a re-transmission unit, RU, and an acknowledgment of RUs (156) that have been received;
receiving, by the DSL transmitter (402), the acknowledgment message (452); and
transmitting, by the DSL transmitter (402), a second RU (156) to the DSL receiver (408, 502) when the DSL receiver (408, 502) is capable of receiving the data packet.

Advantageously, the method further comprises:
receiving, by the DSL receiver (408, 502), the second RU (156) over a communication link;
converting, by the DSL receiver (408, 502), the RU (156) to a continuous bit stream (152); and
processing, by the DSL receiver (408, 502), the continuous bit stream (152) to provide the data packet.

Advantageously, the method further comprises:
converting, by the DSL transmitter (402), a data packet to a continuous bit stream (152) when the DSL receiver (408, 502) is capable of receiving the data packet; and
processing, by the DSL receiver (408, 502), the continuous bit stream (152) to provide the second RU (156).

Advantageously, the method further comprises:
providing, by the DSL receiver (408, 502), the data packet to a communication device (318, 320, 322, 324) or a network (206) at a first rate, and wherein transmitting the second RU (156) comprises:
   transmitting the second RU (156) at a second rate, the second rate being less than the first rate.

### BRIEF DESCRIPTION OF THE DRAWINGS/FIGURES

The present disclosure is described with reference to the accompanying drawings. In the drawings, like reference numbers indicate identical or functionally similar elements. Additionally, the left most digit(s) of a reference number identifies the drawing in which the reference number first appears.
FIG. 1 illustrates a block diagram of a conventional DSL communication system;
FIG. 2 illustrates a block diagram of an exemplary point-to-multipoint DSL communication system according to an embodiment of the present disclosure;
FIG. 3 illustrates an exemplary customer premises that can be implemented within the DSL communication system according to an exemplary embodiment of the present disclosure;
FIG. 4 illustrates a block diagram of a first DSL communication system having remote back-pressure flow control according to an exemplary embodiment of the present disclosure; and
FIG. 5 illustrates a block diagram of a second DSL communication system having remote back-pressure flow control according to an exemplary embodiment of the present disclosure.

The present disclosure will now be described with reference to the accompanying drawings. In the drawings, like reference numbers generally indicate identical, functionally similar, and/or structurally similar elements. The drawing in which an element first appears is indicated by the leftmost digit(s) in the reference number.

### DETAILED DESCRIPTION OF THE DISCLOSURE

The following Detailed Description refers to accompanying drawings to illustrate exemplary embodiments consistent with the disclosure. References in the Detailed Description to "one exemplary embodiment," "an exemplary embodiment," "an example exemplary embodiment," etc., indicate that the exemplary embodiment described can include a particular feature, structure, or characteristic, but every exemplary embodiment can not necessarily include the particular feature, structure, or characteristic. Moreover, such phrases are not necessarily referring to the same exemplary embodiment. Further, when a particular feature, structure, or characteristic is described in connection with an exemplary embodiment, it is within the knowledge of those skilled in the relevant art(s) to affect such feature, structure, or characteristic in connection with other exemplary embodiments whether or not explicitly described.

The exemplary embodiments described herein are provided for illustrative purposes, and are not limiting. Other exemplary embodiments are possible, and modifications can be made to the exemplary embodiments within the scope of the disclosure. Therefore, the Detailed Description is not meant to limit the disclosure. Rather, the scope of the disclosure is defined only in accordance with the following claims and their equivalents.

Embodiments of the disclosure can be implemented in hardware, firmware, software, or any combination thereof. Embodiments of the disclosure can also be implemented as instructions stored on a machine-readable medium, which can be read and executed by one or more processors. A machine-readable medium can include any mechanism for storing or transmitting information in a form readable by a machine (e.g., a computing device). For example, a machine-readable medium can include non-transitory machine-readable mediums such as read only memory (ROM); random access memory (RAM); magnetic disk storage media; optical storage media; flash memory devices; and others. As another example, the machine-readable medium can include transitory machine-readable medium such as electrical, optical, acoustical, or other forms of propagated signals (e.g., carrier waves, infrared signals, digital signals, etc.). Further, firmware, software, routines, instructions can be described herein as performing certain actions. However, it should be appreciated that such descriptions are merely for convenience and that such actions in fact result from computing devices, processors, controllers, or other devices executing the firmware, software, routines, instructions, etc.

The following Detailed Description of the exemplary embodiments will so fully reveal the general nature of the disclosure that others can, by applying knowledge of those skilled in relevant art(s), readily modify and/or adapt for various applications such exemplary embodiments, without undue experimentation, without departing from the scope of the disclosure. Therefore, such adaptations and modifications are intended to be within the meaning and plurality of equivalents of the exemplary embodiments based upon the teaching and guidance presented herein. It is to be understood that the phraseology or terminology herein is for the purpose of description and not of limitation, such that the terminology or phraseology of the present specification is to be interpreted by those skilled in relevant art(s) in light of the teachings herein.

For purposes of this discussion, the term "module" shall be understood to include at least one of software, firmware, and hardware (such as one or more circuits, microchips, or devices, or any combination thereof), and any combination thereof. In addition, it will be understood that each module can include one, or more than one, component within an actual device, and each component that forms a part of the described module can function either cooperatively or independently of any other component forming a part of the module. Conversely, multiple modules described herein can represent a single component within an actual device. Further, components within a module can be in a single device or distributed among multiple devices in a wired or wireless manner.

### CONVENTIONAL LOCAL BACK-PRESSURE FLOW CONTROL WITHIN A CONVENTIONAL DIGITAL SUBSCRIBER LINE (DSL) COMMUNICATION SYSTEM

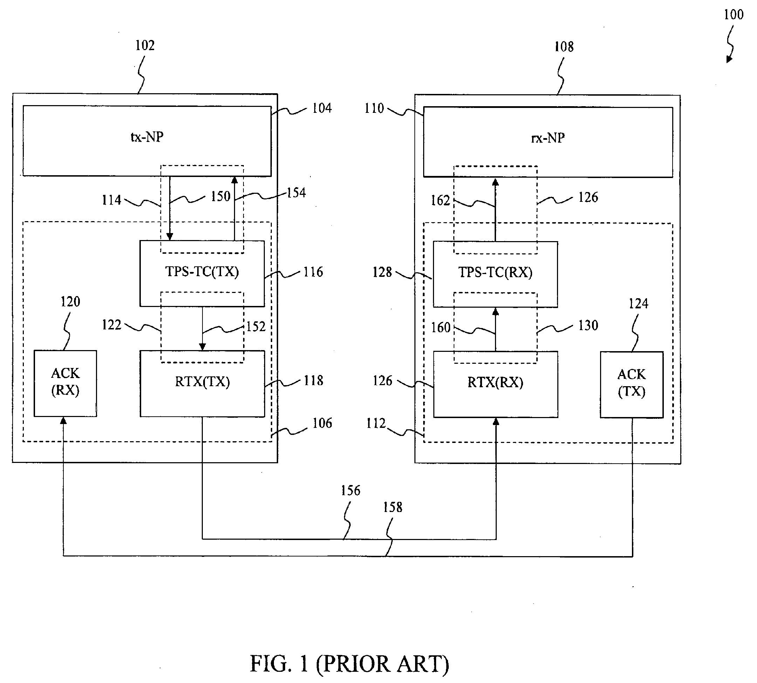

FIG. 1 illustrates a block diagram of a conventional DSL communication system. A conventional DSL communication system 100 typically includes a conventional DSL transmitter 102 having a conventional transmitting network processor (tx-NP) 104 coupled to a conventional DSL physical layer (PHY) 106 and a conventional DSL receiver 108 having a conventional receiving network processor (rx-NP) 110 coupled to a conventional DSL PHY 112. The conventional tx-NP 104 provides one or more packets of information 150 to the conventional DSL PHY 106 at a first rate over a conventional gamma-transmission (γ-tx) interface 114. The conventional γ-tx interface 114 represents a conventional point-to-point packet interface between the conventional tx-NP 104 and the conventional DSL PHY 106. This conventional γ-tx interface 114 is typically implemented in accordance to the G.999.1 Standard but other implementations are possible such as Utopia Level 2 (Utopia L2) interface or a Packet Over SONET Physical Layer (POS-PHY) interface to provide some examples.

The conventional DSL PHY 106 includes a conventional transmitter transport protocol specific transmission convergence (TPS-TC(TX)) module 116, a conventional transmitter re-transmission (RTX(TX)) module 118, and a conventional acknowledgement-receiver (ACK(RX)) module 120. The conventional TPS-TC(TX) module 116 converts the one or more packets of information 150 into a continuous bit stream 152 for transmission to the conventional RTX(TX) module 118 over a conventional alpha (α) interface 122 at a second rate. Conventionally, the second rate is slower than the first rate. The conventional TPS-TC(TX) module 116 provides the continuous bit stream 152 over the conventional α interface 122 at a slower rate than it receives the one or more packets of information 150 over the conventional γ-tx interface 114. The conventional TPS-TC(TX) module 116 provides conventional local back-pressure flow control to prevent the conventional tx-NP 104 from overwhelming the conventional DSL PHY 106.

The conventional TPS-TC(TX) module 116 also includes a buffer which in some situations can be overflowed by the one or more packets of information 150 which results in some of the one or more packets of information 150 being discarded or lost. To prevent the overflow of the buffer, the conventional TPS-TC(TX) module 116 provides a flow control signal 154 over the conventional γ-tx interface 114 to regulate the flow of the one or more packets of information 150 over the conventional γ-tx interface 114. The flow control signal 154 can be set to a first state Xon to indicate that the conventional TPS-TC(TX) module 116 is capable of receiving the one or more packets of information 150 over the conventional γ-tx interface 114 or a second state Xoff to indicate that the conventional TPS-TC(TX) module 116 is not capable of receiving the one or more packets of information 150 over the conventional γ-tx interface 114. The flow control signal 154 can be set to the second state Xoff when the first rate, when averaged, is higher than the second rate, when averaged, or when retransmission is requested by the conventional DSL receiver 108.

The conventional RTX(TX) module 118 processes the continuous bit stream 152 to provide one or more re-transmission units (RUs) 156. The processing of the conventional RTX(TX) module 118 can include encapsulating the continuous bit stream 152, scrambling the continuous bit stream 152, error correcting encoding, such as Reed-Solomon coding or Golay coding to provide some examples, the continuous bit stream 152, interleaving the continuous bit stream 152, multiplexing the continuous bit stream 152 with overhead data, or any other processing of the continuous bit stream 152 as described in the Recommendation ITU-T G.998.4, entitled "Improved impulse noise protection for DSL transceivers,". The conventional RTX(TX) module 118 can modulate the continuous bit stream 152 onto a carrier wave using any suitable analog or digital modulation technique for transmission to conventional DSL receiver 108 over a communication link. The suitable analog or digital modulation technique may include amplitude modulation (AM), frequency modulation (FM), phase modulation (PM), phase shift keying (PSK), frequency shift keying (FSK), amplitude shift keying (ASK), quadrature amplitude modulation (QAM), discrete multi-tone (DMT) modulation, orthogonal frequency division multiplexing (OFDM), coded OFDM (COFDM) and/or any other suitable modulation technique that will be apparent to those skilled in the relevant art(s).

The conventional RTX(TX) module 118 stores the one or more RUs 156 into a retransmission queue after their transmission for retransmission if needed. The retransmission queue can include a significant amount of buffering to retain a copy of each of the one or more RUs 156 until its acknowledgement is received from the conventional DSL receiver 108. The minimal amount of memory, typically computed in bits, is based on a roundtrip time between the conventional DSL transmitter 102 and the conventional DSL receiver 108. The roundtrip time is equal to a maximum time between transmission of one of the one or more RUs 156 by the conventional DSL transmitter 102 and reception of its acknowledgement from the conventional DSL receiver 108.

A conventional acknowledgement-receiver (ACK(RX)) module 120 receives one or more conventional acknowledgment messages 158 from the conventional DSL receiver 108 over the communications link. Upon receipt of the one or more conventional acknowledgment messages 158, the conventional ACK(RX) module 120 can indicate to the conventional RTX(TX) module 118 to remove one or more copies of the one or more RUs 156 from the retransmission queue which correspond to the one or more conventional acknowledgment messages 158. Additionally, the conventional ACK(RX) module 120 can determine whether re-transmission of the one or more RUs 156 is needed when acknowledgements that correspond to the one or more RUs 156 are not received from the conventional DSL receiver 108. For example, when acknowledgements that correspond to the one or more RUs 156 are not received from the conventional DSL receiver 108 in a certain amount of time, the one or more RUs 156 are automatically retransmitted.

The conventional DSL PHY 112 includes a conventional acknowledgement-transmitter (ACK(TX)) module 124, a conventional receiver re-transmission (RTX(RX)) module 126, and a conventional receiver transport protocol specific transmission convergence (TPS-TC(RX)) module 128. The conventional ACK(TX) module 124 provides the one or more conventional acknowledgment messages 158 to the conventional DSL transmitter 102 over the communications link. The conventional ACK(TX) module 124 can provide the one or more conventional acknowledgment messages 158 that correspond to the one or more RUs 156 that are received from the conventional DSL transmitter 108.

The conventional RTX(RX) module 126 processes the one or more RUs 156 to provide a continuous bit stream 160 to the TPS-TC(RX)) module 128 over a conventional beta (β) interface 130 at a third rate. The processing of the conventional RTX(RX) module 126 can include de-encapsulating the one or more RUs 156, error correcting, and/or decoding the one or more RUs 156, de-interleaving the one or more RUs 156, demultiplexing the overhead data from the one or more RUs 156 or any other processing of the one or more RUs 156 as described in the Recommendation ITU-T G.998.4, entitled "Improved impulse noise protection for DSL transceivers,". The conventional RTX(RX) module 126 can demodulate the one or more RUs 156 using any suitable analog or digital demodulation technique. The suitable analog or digital modulation technique may include amplitude modulation (AM), frequency modulation (FM), phase modulation (PM), phase shift keying (PSK), frequency shift keying (FSK), amplitude shift keying (ASK), quadrature amplitude modulation (QAM), discrete multi-tone (DMT) modulation, orthogonal frequency division multiplexing (OFDM), coded OFDM (COFDM) and/or any other suitable modulation technique that will be apparent to those skilled in the relevant art(s).

The conventional TPS-TC(RX) module 128 converts the continuous bit stream 160 into one or more recovered packets 162 for transmission to the conventional rx-NP 110 over a conventional gamma-reception (γ-rx) interface 126 at a fourth rate. The conventional γ-rx interface 126 represents a conventional point-to-point packet interface between the conventional rx-NP 110 and the conventional DSL PHY 112. This conventional γ-rx interface 126 is typically implemented in accordance to the G.999.1 Standard but other implementations are possible such as a Utopia L2 interface or a POS-PHY interface to provide some examples.

In more recent versions of DSL, the conventional DSL PHY 106 can no longer be assumed to be the bottleneck for the traffic, namely the first rate at which the conventional tx-NP 104 provides the one or more packets of information 150 to the conventional TPS-TC(TX) module 116 is substantially similar to the second rate at which conventional TPS-TC(TX) module 116 provides the continuous bit stream 152 to the conventional RTX(TX) module 118. Rather, bottlenecks, if any, can occur at the conventional rx-NP 110 in the conventional DSL receiver 108 in these more recent versions of DSL. For example, in these more recent versions of DSL, the conventional DSL PHY 106 is often implemented as part of a conventional multi-port DSL transmitting device having multiple conventional DSL PHYs 106. This conventional multi-port DSL transmitting device provides RUs, which include the one or more RUs 156, to a conventional multi-port DSL receiving device, having multiple conventional DSL PHYs 112, at a high data rate using multiple lower rate DSL links. Thereafter, the multiple conventional DSL PHYs 112 provide the RUs to the conventional rx-NP 110. Often times, this high data rate is faster than a low data rate that the conventional rx-NP 110 provides one or more packets to communication devices or networks, such as a LAN or a WAN to provide some examples, coupled to the conventional DSL receiver 108. As a result, the conventional local back-pressure flow control provided by the conventional TPS-TC(TX) modules 116 of each of the multiple conventional DSL PHYs 106 may no longer be adequate to prevent the multi-port DSL transmitting device from overwhelming the conventional multi-port DSL receiving device.

### OVERVIEW

The present disclosure extends the flow control in a DSL communication system to include a remote back-pressure flow control within a DSL receiver of the DSL communication system. The remote back-pressure flow control can prevent a DSL transmitter of the DSL communication system from overwhelming the DSL receiver. The remote back-pressure flow control can be implemented within a receiving network processor (rx-NP) of the DSL receiver to prevent the DSL transmitter from overwhelming the rx-NP.

### EXEMPLARY DIGITAL SUBSCRIBER LINE (DSL) COMMUNICATION SYSTEM

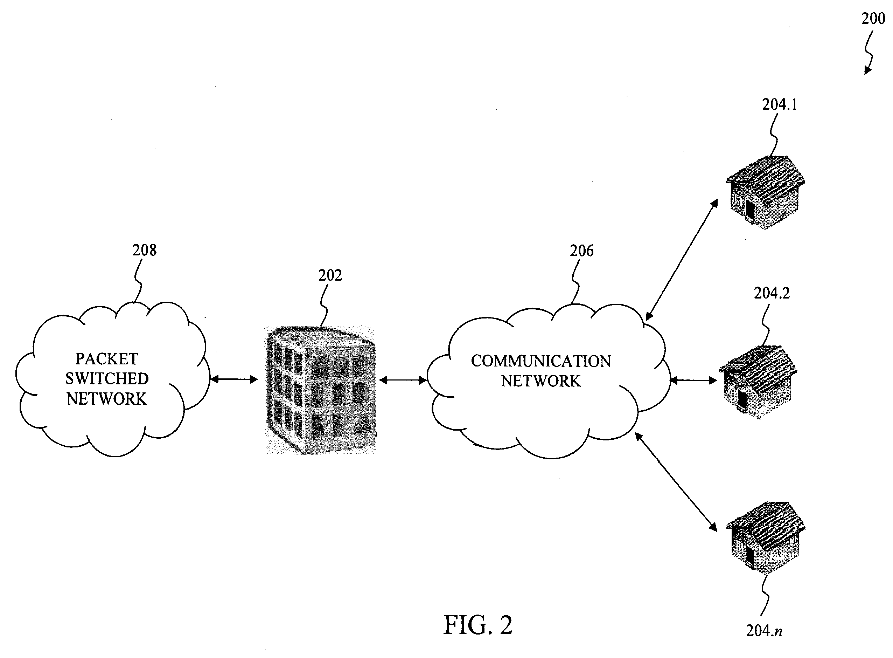

FIG. 2 illustrates a block diagram of an exemplary point-to-multipoint DSL communication system according to an embodiment of the present disclosure. A communications system 200 facilitates bi-directional communication of information, such as video, audio, and/or data to provide some examples, between a cabinet 202 and customer premises 204.1 through 204.*n* via a communication network 206, such as a fiber optic network, a coaxial cable network, or a hybrid fiber coaxial (HFC) cable network to provide some examples. The cabinet 202 and the customer premises 204.1 through 204.*n* communicate with each other using a bi-directional transfer of packet-based traffic, such re-transmission units (RUs) to provide an example. The cabinet 202 operates as an interface between the communication network 206 and a packet switched network 208 to transfer IP packets received from the customer premises 204.1 through 204.*n* to the packet switched network 208 and to transfer IP packets received from the packet switched network 208 to the customer premises 204.1 through 204.*n*.

The cabinet 202 includes a DSL transceiver having a DSL transmitter for communicating information in the downstream to the customer premises 204.1 through 204.*n* via the communication network 206. As used herein, the term "downstream" refers to the transfer of information in a first direction from the cabinet 202 to the customer premises 204.1 through 204.*n*. The term "upstream" refers to the transfer of information in a second direction from the customer premises 204.1 through 204.*n* to the cabinet 202. The DSL transceiver of the cabinet 202 also includes a DSL receiver for receiving information from the customer premises 204.1 through 204.*n* via the communication network 206. Similarly, each of the customer premises 204.1 through 204.*n* include a DSL transceiver having a DSL transmitter for communicating information in the upstream to the cabinet 202 via the communication network 206. The DSL transceiver of each of the customer premises 204.1 through 204.*n* also includes a DSL receiver for receiving information from the cabinet 202 via the communication network 206.

In an exemplary embodiment, the cabinet 202 is implemented as part of a multi-port DSL transceiver having multiple DSL transmitters for communicating information in the downstream to the customer premises 204.1 through 204.*n* at a high data rate using multiple lower rate DSL links. The multi-port DSL transceiver can include multiple DSL receivers for receiving information from the customer premises 204.1 through 204.*n* in the upstream at the high data rate using the multiple lower rate DSL links. The multiple DSL receivers provide upstream information from the customer premises 204.1 through 204.*n*.to the packet switched network 208 at a rate that is slower than a rate at which the customer premises 204.1 through 204.*n* communicate the upstream information to cabinet 202. This slower rate can cause one or more bottlenecks within the cabinet 202. The cabinet 202 include remote back-pressure flow controls to prevent the cabinet 202 from being overwhelmed by the customer premises 204.1 through 204.*n*.

### EXEMPLARY CUSTOMER PREMISES WITHIN THE DSL COMMUNICATION SYSTEM

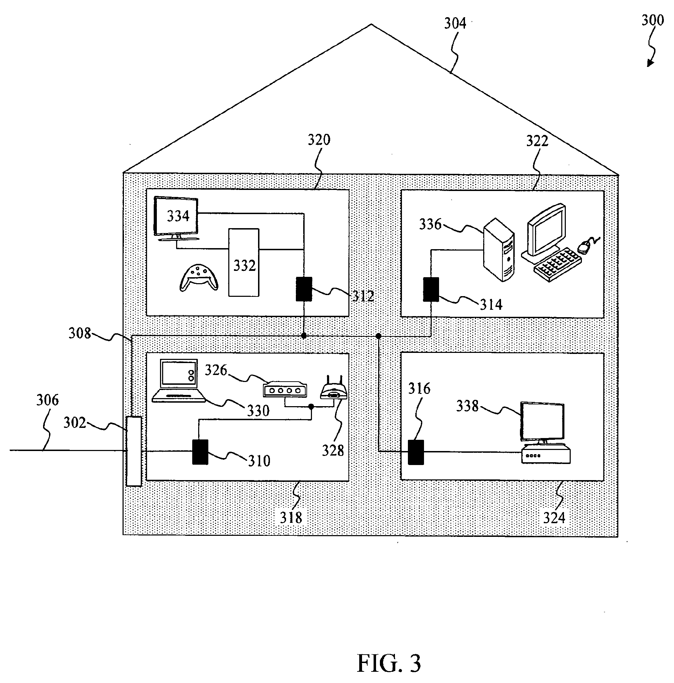

FIG. 3 illustrates an exemplary customer premises that can be implemented within the DSL communication system according to an exemplary embodiment of the present disclosure. A customer premise 300 includes a DSL transceiver 302 for communicating information, such as video, audio, and/or data, between a cabinet, such as the cabinet 202 to provide an example, and a customer premise 304, such as one or more of the customer premises 204.1 through 204.*n* to provide an example, over a communication network 306.

As shown in FIG. 3, the communication network 306 carries the information between the cabinet and the DSL transceiver 302 at the customer premise 304. The DSL transceiver 302 converts downstream communication signals from the cabinet to communication signals for the customer premise 304 and/or communication signals from the customer premise 304 to upstream communication signals for the cabinet. One or more electrical communication cables 308, such as one or more copper communication cables and/or one or more coaxial communication cables to provide some examples, couple the DSL transceiver 302 to DSL adapters 310 through 316. Although the DSL adapters 310 through 316 are shown as separate devices in FIG. 3, those skilled in the relevant art(s) will recognize that the DSL adapters 310 through 316 may be implemented into other hardware, such as the DSL transceiver 302 to provide an example, without departing from the scope of the present disclosure.

The DSL adapters 310 through 316 provide television, internet data, and/or other services to various consumer electronics and/or home networking devices within various rooms 318 through 324 of the customer premise 304. It should be noted that the number of rooms and/or DSL adapters as shown in FIG. 3 are for illustrative purposes only, those skilled in the relevant art(s) will recognize that a different number of rooms and/or DSL adapters may be within the customer premise 304 without departing from the scope of the present disclosure. The DSL adapter 310 within the room 318 couples to a set top box 326 and a wireless router 328, which in turn, provides wireless access to a portable computer 330. Similarly, the DSL adapter 312 within the room 320 couples to a video game console 332 and a television 334 to provide wireless access to the video game console 332 and the television 334. Likewise, the DSL adapter 314 within the room 322 and the DSL adapter 316 within the room 324 couple to a personal computer 336 and a personal computer 338, respectively. The DSL adapters 310 through 316 are configured and arranged to form a home network allowing the set top box 326, the wireless router 328, the portable computer 330, the video game console 332, the television 334, the personal computer 336, and/or the personal computer 338 to communicate amongst themselves as well as with the cabinet via the DSL transceiver 302. It should be noted that the consumer electronics and/or home networking devices within the customer premise 304 as shown in FIG. 3 is for illustrative purposes only, those skilled in the relevant art(s) will recognize that other communication devices and/or networks may be within the customer premise 304 without departing from the scope of the present disclosure.

The DSL transceiver 302 provides upstream information from the DSL adapters 310 through 316 at a rate that is faster than a rate at which the cabinet communicates the upstream information to a communication network, such as the packet switched network 208 to provide an example. This difference in rates can overwhelm the cabinet causing a bottleneck. For example, the DSL transceiver 302 can be implemented as part of a multi-port DSL transceiver having multiple DSL transmitters for communicating the upstream information to the cabinet at a high data rate using multiple lower rate DSL links. In this example, the cabinet can include multiple DSL receivers for receiving information from the DSL transceiver 302 in the upstream at the high data rate using the multiple lower rate DSL links. The multiple DSL receivers can provide upstream information from the DSL transceiver 302 to the communication network at a rate that is slower than a rate at which the DSL transceiver 302 communicates the upstream information to cabinet. This slower rate can cause one or more bottlenecks within the cabinet 202 which can overwhelm the cabinet causing the bottleneck. During the bottleneck, the cabinet can no longer store the upstream information which results in some of the upstream information being discarded or lost. The cabinet includes a remote back-pressure flow control to prevent the bottleneck.

### REMOTE BACK-PRESSURE FLOW CONTROL WITHIN THE DSL COMMUNICATION SYSTEM

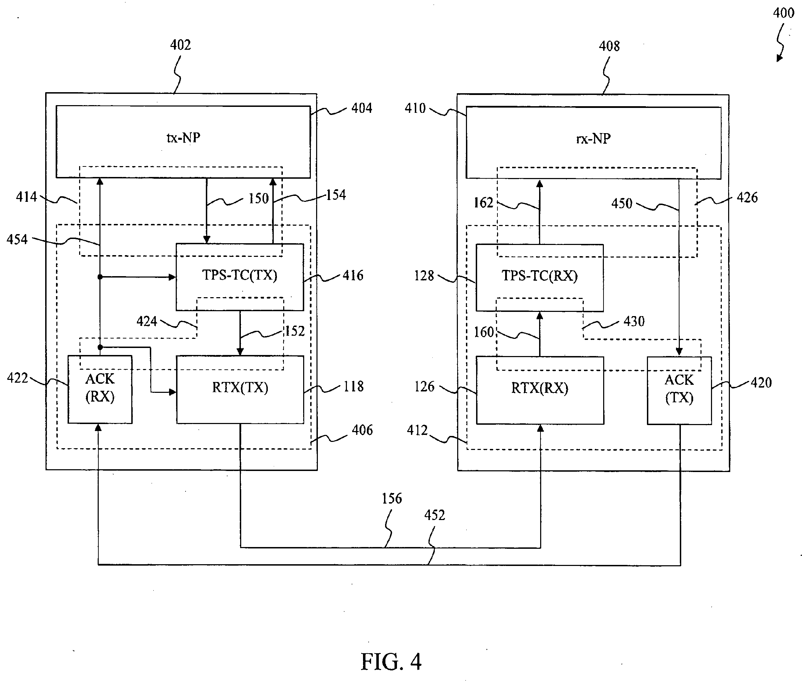

FIG. 4 illustrates a block diagram of a first DSL communication system having remote back-pressure flow control according to an exemplary embodiment of the present disclosure. A DSL communication system 400 typically includes a DSL transmitter 402 having a transmitting network processor (tx-NP) 404 coupled to a DSL physical layer (PHY) 406 and a DSL receiver 408 having a receiving network processor (rx-NP) 410 coupled to a DSL PHY 412. The DSL transmitter 402 can be implemented within a first DSL transceiver located at a customer premises, such as one of the customer premises 204.1 through 204.*n* to provide an example, and the DSL receiver 408 can be implemented within a second DSL transceiver located at a at a cabinet, such as the cabinet 202 to provide an example, or the DSL transmitter 402 can be implemented within the second DSL transceiver located at the cabinet and the DSL receiver 408 can be implemented within the first DSL transceiver located at the customer premises. The first DSL transceiver and the second DSL transceiver create a digital subscriber line or DSL. The DSL communication system 400 shares some substantially similar features with the conventional DSL communication system 100; therefore, only differences between the conventional DSL communication system 100 and the DSL communication system 400 are to be discussed in further detail.

The tx-NP 404 provides one or more packets of information 150 to the DSL PHY 406 at a first rate over a gamma-transmission (γ-tx) interface 414. The γ-tx interface 414 represents a point-to-point packet interface between the tx-NP 404 and the DSL PHY 406. This γ-tx interface 414 is typically implemented in accordance to the G.999.1 Standard but other implementations are possible such as Utopia Level 2 (Utopia L2) interface or a Packet Over SONET Physical Layer (POS-PHY) interface to provide some examples.

The DSL PHY 406 includes the conventional RTX(TX) module 118, a transmitter transport protocol specific transmission convergence (TPS-TC(TX)) module 416, and an acknowledgement-receiver (ACK(RX)) module 422. The TPS-TC(TX) module 416 converts the one or more packets of information 150 into the continuous bit stream 152 for transmission to the conventional RTX(TX) module 118 over an alpha (α) interface 424 at a second rate. The TPS-TC(TX) module 416 provides local back-pressure flow control to prevent the tx-NP 404 from overwhelming the DSL PHY 406 in a substantially similar manner as the conventional TPS-TC(TX) module 116.

The DSL PHY 412 includes the conventional RTX(RX) module 126, the conventional TPS-TC(RX)) module 128, and an acknowledgement-transmitter (ACK(TX)) module 420. The conventional RTX(RX) module 126 processes the one or more RUs 156 to provide the continuous bit stream 160 to the TPS-TC(RX)) module 128 over a beta (β) interface 430 at the third rate. The conventional TPS-TC(RX) module 128 converts the continuous bit stream 160 into one or more recovered packets 162 for transmission to the rx-NP 410 over a gamma-reception (γ-rx) interface 426 at the fourth rate. The γ-rx interface 426 represents a point-to-point packet interface between the rx-NP 410 and the DSL PHY 412. This γ-rx interface 426 is typically implemented in accordance to the G.999.1 Standard but other implementations are possible such as a Utopia L2 interface or a POS-PHY interface to provide some examples.

The rx-NP 410 receives the one or more packets of information 162 from the DSL PHY 412 at the fourth rate over the γ-rx interface 426. When the DSL receiver 408 implemented within the cabinet, the rx-NP 410 provides the one or more packets of information 162 to various networks, such as the packet switched network 208 to provide an example. Otherwise, when the DSL receiver 408 implemented within the customer premises, the rx-NP 410 provides the one or more packets of information 162 to various communication devices, such as the DSL adapters 310 through 316 to provide some examples. The rx-NP 410 116 also includes one or more buffers which in some situations can be overflowed by the one or more packets of information 150 which results in some of the one or more packets of information 150 being discarded or lost. For example, a rate at which the rx-NP 410 provides the one or more packets of information 162 to the various communication devices and/or the networks is slower than a rate at which the conventional RTX(TX) module 118 provides the one or more RUs 156 to the conventional RTX(RX)) module 126. In this example, this faster rate of the conventional RTX(TX) module can overflow the one or more buffers. To prevent the overflow of the one or more buffers, the rx-NP 410 provides a flow control information 450 over the γ-rx interface 426 to regulate the flow of the one or more packets of information 150 over the γ-tx interface 414. The flow control information 450 can be set to a first state Xon to indicate that the rx-NP 410 is capable of receiving the one or more RUs 156 from the conventional RTX(TX) module 118 or a second state Xoff to indicate that rx-NP 410 is not capable of receiving the one or more RUs 156 from the conventional RTX(TX) module 118. The flow control information 450 can be set to the second state Xoff when the rate, when averaged, at which the conventional RTX(TX) module 118 provides the one or more RUs 156 is higher than the rate, when averaged, at which the rx-NP 410 provides the one or more packets of information 162. Alternatively, the flow control information 450 can indicate an amount of information, typically in bytes, that can be transferred to the rx-NP 410 without overflowing the one or more buffers.

An acknowledgement-transmitter ACK(TX) module 420 provides one or more acknowledgment messages 452 to the DSL transmitter 402 over the communications link. The one or more acknowledgment messages 452 includes the one or more conventional acknowledgment messages 158 that correspond to the one or more RUs 156 that are received from the DSL transmitter 408 and the flow control information 450. For example, a format of the one or one or more conventional acknowledgment messages 158 can be extended to include a field, typically a bit, for the flow control information 450 to form the one or more acknowledgment messages 452. In this example, the bit can be set to a first value to indicate that the rx-NP 410 is capable of receiving the one or more RUs 156 from the conventional RTX(TX) module 118 or to a second value when the rx-NP 410 is not capable of receiving the one or more RUs 156 from the conventional RTX(TX) module 118.

An acknowledgement-receiver (ACK(RX)) module 422 receives the one or more acknowledgment messages 452 from the DSL receiver 408 over the communications link. Upon receipt of the one or more acknowledgment messages 452, the ACK(RX) module 422 can indicate to the RTX(TX) module 118 to remove one or more copies of the one or more RUs 156 from the retransmission queue and determine whether re-transmission of the one or more RUs 156 is needed in a substantially similar manner as the conventional ACK(RX) module 140.

Additionally, the ACK(RX)) module 422 can provide the flow control information 450 as flow control information 454 to the tx-NP 404 over the γ-tx interface 414 and/or the TPS-TC(TX) module 416 over the α interface 424. When the flow control information 454 is in the first state Xon to indicate that the rx-NP 410 is capable of receiving the one or more RUs 156, the tx-NP 404 can continue to provide the one or more packets of information 150 over the γ-tx interface 414 and/or the TPS-TC(TX) module 416 can continue to provide the continuous bit stream 152 over the α interface 424. Otherwise, when the flow control information 454 is in the second state Xoff to indicate that the rx-NP 410 is not capable of receiving the one or more RUs 156, the tx-NP 404 can cease to provide the one or more packets of information 150 over the γ-tx interface 414 and/or the TPS-TC(TX) module 416 can cease to provide the continuous bit stream 152 over the α interface 424. When the flow control information 454 is in the second state, the tx-NP 404 can store the one or more packets of information 150 and/or the TPS-TC(TX) module 416 can store the continuous bit stream 152.

In some situations, the one or more acknowledgment messages 452 can be corrupted or expected and not received by the ACK(RX)) module 422. In these situations, the ACK(RX)) module 422 provides the flow control information 454 in the second state Xoff. This is consistent with the retransmission function of the TPS-TC(TX) module 416 because if the one or more acknowledgment messages 452 are not received or otherwise corrupted, one of the one or more RUs 156 whose acknowledgment message is not received or otherwise corrupted is re-transmitted. As a result, no new information will be requested from tx-NP 404 for transmission to the rx-NP 408.

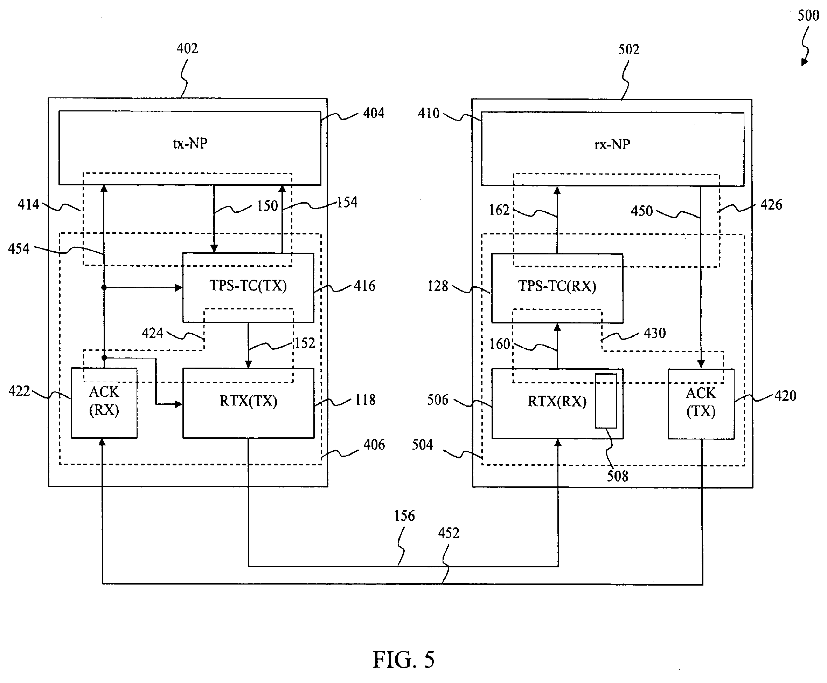

FIG. 5 illustrates a block diagram of a second DSL communication system having remote back-pressure flow control according to an exemplary embodiment of the present disclosure. A DSL communication system 500 typically includes the DSL transmitter 402 having the tx-NP 404 coupled to the DSL PHY 406 and a DSL receiver 502 having the rx-NP 410 coupled to a DSL PHY 504. The DSL transmitter 402 can be implemented within a first DSL transceiver located at a customer premises, such as one of the customer premises 204.1 through 204.*n* to provide an example, and the DSL receiver 502 can be implemented within a second DSL transceiver located at a at a cabinet, such as the cabinet 202 to provide an example, or the DSL transmitter 402 can be implemented within the second DSL transceiver located at the cabinet and the DSL receiver 502 can be implemented within the first DSL transceiver located at the customer premises. The first DSL transceiver and the second DSL transceiver create a digital subscriber line or DSL. The DSL communication system 500 shares some substantially similar features with the conventional DSL communication system 100 and the DSL communication system 400; therefore, only differences between the DSL communication system 500 and the conventional DSL communication system 100 and the DSL communication system 400 are to be discussed in further detail.

The DSL PHY 504 includes the conventional TPS-TC(RX) module 128, the ACK(TX) module 420, and a receiver re-transmission (RTX(RX)) module 506. The RTX(RX) module 506 includes a memory, or buffer, 508. In an exemplary embodiment, the memory 508 stores the one or more RUs 156 that are currently being provided by the conventional RTX(TX) module 118 when the rx-NP 410 switches the flow control information 450 from the first state Xon to the second state Xoff. This allows the tx-NP 404 to complete its processing of existing information received from various communication devices and/or networks, the TPS-TC(TX) module 416 to complete its processing of the one or more packets of information 150, and/or the conventional RTX(TX) module 118 to complete its processing of the continuous bit stream 152. Once the second state Xoff is detected, the RTX(RX) module 506 can release the one or more RUs 156 that are transmitted in one round trip between the DSL transmitter 402 and the DSL receiver 502 to the TPS-TC(RX) module 128 over the beta (β) interface 430. After the release of these one or more RUs 156, the RTX(RX) module 506 stores the one or more RUs 156 into the memory 508 until the flow control information 450 is set to the first state Xon. In another exemplary embodiment, as soon as the rx-NP 410 switches the flow control information 450 from the first state Xon to the second state Xoff, the RTX(RX)) module 506 no longer provides the continuous bit stream 160 over the P interface 430. The memory 508 begins to store or buffer the one or more RUs 156. Once the memory 508 is at maximum capacity, the one or more RUs 156 are disregarded and a request for re-transmission is sent to the DSL transmitter 402. A special indication within the one or more acknowledgment messages 452 can be used to distinguish these disregarded RUs from other RUs that are received in error by the RTX(RX) module 506.

### CONCLUSION

It is to be appreciated that the Detailed Description section, and not the Abstract section, is intended to be used to interpret the claims. The Abstract section can set forth one or more, but not all exemplary embodiments, of the present disclosure, and thus, are not intended to limit the present disclosure and the appended claims in any way.

The present disclosure has been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

It will be apparent to those skilled in the relevant art(s) that various changes in form and detail can be made therein without departing from the scope of the disclosure. Thus the present disclosure should not be limited by any of the above-described exemplary embodiments, but should be defined only in accordance with the following claims and their equivalents.

## Claims

1. A digital subscriber line, DSL, receiver, comprising:
a receiving network processor (410) configured to provide flow control information (450) to indicate whether it is capable of receiving a data packet;
a DSL physical layer, PHY, (412) configured to receive the flow control information (450) from the receiving network processor (410) and to provide the data packet to the receiving network processor (410) when the receiving network processor (410) is capable of receiving the data packet, wherein the DSL PHY (412) is further configured to receive a re-transmission unit, RU, (156) from a DSL transmitter (402), to generate the data packet from the RU (156); and
an acknowledgement-transmitter, ACK TX, module (420) configured to provide an acknowledgement message (452) to the DSL transmitter (402) upon receipt of the RU (156),
wherein the acknowledgement message (452) includes the flow control information (450), an acknowledgement of RUs (156) that have been received, and an indication whether the receiving network processor (410) is capable of receiving the data packet.

2. The DSL receiver of claim 1, wherein the DSL PHY (412) is configured to receive the RU (156) at a first rate,
wherein the receiving network processor (410) is configured to provide the data packet to a communication device (318, 320, 322, 324) or a network (206) at a second rate, and wherein the first rate is greater than the second rate.

3. The DSL receiver of any preceding claim, wherein the DSL PHY (412) comprises:
a receiver re-transmission, RTX RX, module (126, 506) configured to process the RU (156) to provide a continuous bit stream (160); and
a receiver transport protocol specific transmission convergence, TPS-TC RX, module (128) configured to process the continuous bit stream (160) to provide the data packet.

4. The DSL receiver of any preceding claim, wherein the acknowledgement message (452) includes a field having a bit that is settable to indicate whether the receiving network processor (410) is capable of receiving the data packet.

5. The DSL receiver of any of any preceding claim, wherein the RTX RX module (126, 506) comprises:
a memory (508) configured to store the RU (156) when the receiving network processor (410) is not capable of receiving the data packet.

6. The DSL receiver of any preceding claim, wherein the receiving network processor (410) is further configured to provide the flow control information (450) to a DSL transmitter (402) indicating whether the receiving network processor (410) is capable of receiving the data packet.

7. A digital subscriber line, DSL, transmitter, comprising:
an acknowledgement-receiver, ACK RX, module configured to receive an acknowledgement message (452) from a DSL receiver (408, 502), the acknowledgement message (452) including flow control information (450) indicating whether the DSL receiver (408, 502) is capable of receiving a re-transmission unit, RU, an acknowledgement of RUs (156) that have been received at the DSL receiver (408, 502); and
a transmitter re-transmission, RTX TX, module configured to provide the RU (156) to the DSL receiver (408, 502) when the DSL receiver (408, 502) is capable of receiving the RU (156).

8. The DSL transmitter of claim 7, wherein the RTX TX module is configured to provide the RU (156) to the DSL receiver (408, 502) when a receiving network processor (410) within the DSL receiver (408, 502) is capable of receiving a data packet.

9. The DSL transmitter of claim 7 or 8, wherein the acknowledgement message (452) further indicates whether a previous RU (156) has been received by the DSL receiver (408, 502).

10. The DSL transmitter of claim 7, further comprising:
a transmitting network processor (402) configured to receive the flow control information (450) and to provide the data packet when the flow control information (450) indicates the DSL receiver (408, 502) is capable of receiving the RU (156).

11. DSL transmitter of claim 7, further comprising:
a transmitter transport protocol specific transmission convergence, TPS-TC TX, module configured to receive the flow control information (450) and to convert the data packet into a continuous bit stream (152) when the flow control information (450) indicates the DSL receiver (408, 502) is capable of receiving the RU (156).

12. A method for implementing a remote back-pressure flow control within a digital subscriber line, DSL, communication system, comprising:
providing, by a DSL receiver (408, 502), flow control information (450) to indicate whether the DSL receiver (408, 502) is capable of receiving a data packet;
transmitting, by the DSL receiver (408, 502), an acknowledgement message (452) to a DSL transmitter (402) to include the flow control information (450), an acknowledgment of receiving a re-transmission unit, RU, and an acknowledgement of RUs (156) that have been received;
receiving, by the DSL transmitter (402), the acknowledgement message (452); and
transmitting, by the DSL transmitter (402), a second RU (156) to the DSL receiver (408, 502) when the DSL receiver (408, 502) is capable of receiving the data packet.

13. The method of claim 12, further comprising:
receiving, by the DSL receiver (408, 502), the second RU (156) over a communication link;
converting, by the DSL receiver (408, 502), the RU (156) to a continuous bit stream (152); and
processing, by the DSL receiver (408, 502), the continuous bit stream (152) to provide the data packet.

14. The method of claim 12 or 13, further comprising:
converting, by the DSL transmitter (402), a data packet to a continuous bit stream (152) when the DSL receiver (408, 502) is capable of receiving the data packet; and
processing, by the DSL receiver (408, 502), the continuous bit stream (152) to provide the second RU (156).

15. The method of any of claims 12 to 14, further comprising:
providing, by the DSL receiver (408, 502), the data packet to a communication device (318, 320, 322, 324) or a network (206) at a first rate, and wherein transmitting the second RU (156) comprises:
transmitting the second RU (156) at a second rate, the second rate being less than the first rate.

## Patentansprüche

1. Digitaler Teilnehmeranschlussempfänger (DSL-Empfänger), der umfasst:
- einen empfangenden Netzwerkprozessor (410), der dafür ausgelegt ist, Flussregelinformationen (450) bereitzustellen, um anzugeben, ob er dazu fähig ist, ein Datenpaket zu empfangen,
- eine DSL-Bitübertragungsschicht (PHY) (412), die dafür ausgelegt ist, die Flussregelinformationen (450) von dem empfangenden Netzwerkprozessor (410) zu empfangen und das Datenpaket dem empfangenden Netzwerkprozessor (410) zuzuführen, wenn der empfangende Netzwerkprozessor (410) dazu fähig ist, das Datenpaket zu empfangen, wobei die DSL-PHY (412) ferner dafür ausgelegt ist, eine Übertragungswiederholungseinheit (156) von einem DSL-Sender (402) zu empfangen, um aus der Übertragungswiederholungseinheit (156) das Datenpaket zu erzeugen, und
- ein Bestätigungssendermodul (ACK-TX-Modul) (420), das dafür ausgelegt ist, bei Empfang der Übertragungswiederholungseinheit (156) dem DSL-Sender (402) eine Bestätigungsmeldung (452) zuzuführen,
- wobei die Bestätigungsmeldung (452) die Flussregelinformationen (450), eine Bestätigung für Übertragungswiederholungseinheiten (156), die empfangen wurden, und eine Angabe umfasst, ob der empfangende Netzwerkprozessor (410) dazu fähig ist, das Datenpaket zu empfangen.

2. DSL-Empfänger nach Anspruch 1,
- wobei die DSL-PHY (412) dafür ausgelegt ist, die
Übertragungswiederholungseinheit (156) mit einer ersten Rate zu empfangen,
- wobei der empfangende Netzwerkprozessor (410) dafür ausgelegt ist, das Datenpaket mit einer zweiten Rate einer Kommunikationseinrichtung (318, 320, 322, 324) oder einem Netzwerk (206) zuzuführen, und wobei die erste Rate größer als die zweite Rate ist.

3. DSL-Empfänger nach einem der vorhergehenden Ansprüche, wobei die DSL-PHY (412) umfasst:
- ein Empfänger-Übertragungswiederholungsmodul (RTX-RX-Modul) (126, 506), das dafür ausgelegt ist, die Übertragungswiederholungseinheit (156) zu verarbeiten, um einen kontinuierlichen Bitstrom (160) bereitzustellen, und
- ein Empfängermodul mit transportprotokollspezifischer
Übertragungskonvergenz (TPS-TC-RX-Modul) (128), das dafür ausgelegt ist, den kontinuierlichen Bitstrom (160) zu verarbeiten, um das Datenpaket bereitzustellen.

4. DSL-Empfänger nach einem der vorhergehenden Ansprüche, wobei die Bestätigungsmeldung (452) ein Feld umfasst, das ein Bit aufweist, das einstellbar ist, um anzugeben, ob der empfangende Netzwerkprozessor (410) dazu fähig ist, das Datenpaket zu empfangen.

5. DSL-Empfänger nach einem der vorhergehenden Ansprüche, wobei das RTX-RX-Modul (126, 506) umfasst:
- einen Speicher (508), der dafür ausgelegt ist, die
Übertragungswiederholungseinheit (156) zu speichern, wenn der empfangende Netzwerkprozessor (410) nicht dazu fähig ist, das Datenpaket zu empfangen.

6. DSL-Empfänger nach einem der vorhergehenden Ansprüche, wobei der empfangende Netzwerkprozessor (410) ferner dafür ausgelegt ist, die Flussregelinformationen (450), die angeben, ob der empfangende Netzwerkprozessor (410) dazu fähig ist, das Datenpaket zu empfangen, einem DSL-Sender (402) zuzuführen.

7. Digitaler Teilnehmeranschlusssender (DSL-Sender), der umfasst:
- ein Bestätigungsempfängermodul (ACK-RX-Modul), das dafür ausgelegt ist, eine Bestätigungsmeldung (452) von einem DSL-Empfänger (408, 502) zu empfangen, wobei die Bestätigungsmeldung (452) Flussregelinformationen (450), die angeben, ob der DSL-Empfänger (408, 502) dazu fähig ist, eine Übertragungswiederholungseinheit zu empfangen, und eine Bestätigung für Übertragungswiederholungseinheiten (156) umfasst, die im DSL-Empfänger (408, 502) empfangen wurden, und
- ein Sender-Übertragungswiederholungsmodul (RTX-TX-Modul), das dafür ausgelegt ist, die Übertragungswiederholungseinheit (156) dem DSL-Empfänger (408, 502) zuzuführen, wenn der DSL-Empfänger (408, 502) dazu fähig ist, die Übertragungswiederholungseinheit (156) zu empfangen.

8. DSL-Sender nach Anspruch 7, wobei das RTX-TX-Modul dafür ausgelegt ist, die Übertragungswiederholungseinheit (156) dem DSL-Empfänger (408, 502) zuzuführen, wenn ein empfangender Netzwerkprozessor (410) im DSL-Empfänger (408, 502) dazu fähig ist, ein Datenpaket zu empfangen.

9. DSL-Sender nach Anspruch 7 oder 8, wobei die Bestätigungsmeldung (452) ferner angibt, ob eine frühere Übertragungswiederholungseinheit (156) vom DSL-Empfänger (408, 502) empfangen wurde.

10. DSL-Sender nach Anspruch 7, der ferner umfasst:
- einen sendenden Netzwerkprozessor (402), der dafür ausgelegt ist, die Flussregelinformationen (450) zu empfangen und das Datenpaket bereitzustellen, wenn die Flussregelinformationen (450) angeben, dass der DSL-Empfänger (408, 502) dazu fähig ist, die Übertragungswiederholungseinheit (156) zu empfangen.

11. DSL-Sender nach Anspruch 7, der ferner umfasst:
- ein Sendermodul mit transportprotokollspezifischer Übertragungskonvergenz (TPS-TC-TX-Modul), das dafür ausgelegt ist, die Flussregelinformationen (450) zu empfangen und das Datenpaket in einen kontinuierlichen Bitstrom (152) umzusetzen, wenn die Flussregelinformationen (450) angeben, dass der DSL-Empfänger (408, 502) dazu fähig ist, die Übertragungswiederholungseinheit (156) zu empfangen.

12. Verfahren zum Implementieren einer entfernten Gegendruck-Flussregelung (remote back-pressure flow control) in einem digitalen Teilnehmeranschlusskommunikationssystem (DSL-Kommunikationssystem), das umfasst:
- Bereitstellen, durch einen DSL-Empfänger (408, 502), von Flussregelinformationen (450), um anzugeben, ob der DSL-Empfänger (408, 502) dazu fähig ist, ein Datenpaket zu empfangen,
- Senden, durch den DSL-Empfänger (408, 502), einer Bestätigungsmeldung (452), die die Flussregelinformationen (450), eine Empfangsbestätigung für eine Übertragungswiederholungseinheit und eine Bestätigung für Übertragungswiederholungseinheiten (156) umfasst, die empfangen wurden, an einen DSL-Sender (402),
- Empfangen, durch den DSL-Sender (402), der Bestätigungsmeldung (452) und
- Senden, durch den DSL-Sender (402), einer zweiten
Übertragungswiederholungseinheit (156) an den DSL-Empfänger (408, 502), wenn der DSL-Empfänger (408, 502) dazu fähig ist, das Datenpaket zu empfangen.

13. Verfahren nach Anspruch 12, das ferner umfasst:
- Empfangen, durch den DSL-Empfänger (408, 502), der zweiten Übertragungswiederholungseinheit (156) über eine Kommunikationsverbindung,
- Umsetzen, durch den DSL-Empfänger (408, 502), der Übertragungswiederholungseinheit (156) in einen kontinuierlichen Bitstrom (152) und
- Verarbeiten, durch den DSL-Empfänger (408, 502), des kontinuierlichen Bitstroms (152), um das Datenpaket bereitzustellen.

14. Verfahren nach Anspruch 12 oder 13, das ferner umfasst:
- Umsetzen, durch den DSL-Sender (402), eines Datenpakets in einen kontinuierlichen Bitstrom (152), wenn der DSL-Empfänger (408, 502) dazu fähig ist, das Datenpaket zu empfangen, und
- Verarbeiten, durch den DSL-Empfänger (408, 502), des kontinuierlichen Bitstroms (152), um die zweite Übertragungswiederholungseinheit (156) bereitzustellen.

15. Verfahren nach einem der Ansprüche 12 bis 14, das ferner umfasst:
- Zuführen, durch den DSL-Empfänger (408, 502), des Datenpakets zu einer Kommunikationseinrichtung (318, 320, 322, 324) oder einem Netzwerk (206) mit einer ersten Rate, wobei das Senden der zweiten Übertragungswiederholungseinheit (156) umfasst:
- Senden der zweiten Übertragungswiederholungseinheit (156) mit einer zweiten Rate, wobei die zweite Rate kleiner als die erste Rate ist.

## Revendications

1. Récepteur par ligne d'abonné numérique, DSL, comprenant :
un processeur (410) de réseau de réception configuré pour fournir des informations (450) de commande de flux afin d'indiquer s'il est capable de recevoir un paquet de données ;
une couche physique, PHY, DSL (412) configurée pour recevoir les informations de commande de flux (450) provenant du processeur (410) de réseau de réception, et pour fournir le paquet de données au processeur (410) de réseau de réception lorsque le processeur (410) de réseau de réception est capable de recevoir le paquet de données, dans lequel la PHY DSL (412) est configurée en outre pour recevoir une unité de retransmission, RU (156) provenant de l'émetteur (402) DSL, pour générer le paquet de données provenant de la RU (156) ; et
un module (420) d'émetteur d'accusé de réception, TX ACK, configuré pour fournir un message (452) d'accusé de réception à l'émetteur (402) DSL à réception de la RU (156),
dans lequel le message (452) d'accusé de réception comprend les informations (450) de commande de flux, un accusé de réception des RU (156) qui ont été reçues, et une indication si le processeur (410) de réseau de réception est capable de recevoir le paquet de données.

2. Récepteur DSL selon la revendication 1, dans lequel la PHY DSL est configurée pour recevoir la RU (156) à une première vitesse,
dans lequel le processeur (410) de réseau de réception est configuré pour fournir le paquet de données à un dispositif (318, 320, 322, 324) de communication ou à un réseau (206) à une deuxième vitesse, et dans lequel la première vitesse est supérieure à la seconde vitesse.

3. Récepteur DSL selon l'une quelconque des revendications précédentes, dans lequel la PHY DSL (412) comprend :
un module (126, 506) de retransmission de récepteur, RX RTX, configuré pour traiter la RU (156) en vue de fournir un flux (160) binaire continu ; et
un module (128) de convergence de transmission spécifique d'un protocole de transport de récepteur, RX TPS-TC, configuré pour traiter le flux (160) binaire continu en vue de fournir le paquet de données.

4. Récepteur DSL selon l'une quelconque des revendications précédentes, dans lequel le message (452) d'accusé de réception comprend un champ ayant un bit qui est réglable pour indiquer si le processeur (410) de réseau de réception est capable de recevoir le paquet de données.

5. Récepteur DSL selon l'une quelconque des revendications précédentes, dans lequel le module (126, 506) RX RTX comprend :
une mémoire (508) configurée pour stocker la RU (156) lorsque le processeur (410) de réseau de réception n'est pas capable de recevoir le paquet de données.

6. Récepteur DSL selon l'une quelconque des revendications précédentes, dans lequel le processeur (410) de réseau de réception est configuré en outre pour fournir les informations (450) de commande de flux à un émetteur (402) DSL indiquant si le processeur (410) de réseau de réception est capable de recevoir le paquet de données.

7. Émetteur par ligne d'abonné numérique, DSL, comprenant :
un module de récepteur d'accusé de réception, RX ACK, configuré pour recevoir un message (452) d'accusé de réception d'un récepteur (408, 502) DSL, le message (452) d'accusé de réception comprenant des informations (450) de commande de flux indiquant si le récepteur (408, 502) DSL est capable de recevoir une unité de retransmission, RU, un accusé de réception de RU (156) qui ont été reçues au niveau du récepteur (408, 502) DSL ; et
un module de retransmission d'émetteur, TX RTX, configuré pour fournir la RU (156) au récepteur (408, 502) DSL lorsque le récepteur (408, 502) DSL est capable de recevoir la RU (156).

8. Émetteur DSL selon la revendication 7, dans lequel le module TX RTX est configuré pour fournir la RU (156) au récepteur (408, 502) DSL lorsqu'un processeur (410) de réseau de réception dans le récepteur (408, 502) DSL est capable de recevoir un paquet de données.

9. Émetteur DSL selon la revendication 7 ou 8, dans lequel le message (452) d'accusé de réception indique en outre si une RU (156) précédente a été reçue par le récepteur (408, 502) DSL.

10. Émetteur DSL selon la revendication 7, comprenant en outre :
un processeur (402) de réseau de transmission configuré pour recevoir les informations (450) de commande de flux et pour fournir le paquet de données lorsque les informations (450) de commande de flux indiquent que le récepteur (408, 502) DSL est capable de recevoir la RU (156).

11. Émetteur DSL selon la revendication 7, comprenant en outre :
un module de convergence de transmission spécifique d'un protocole de transport d'émetteur, TX TC-TPS, configuré pour recevoir les informations (450) de commande de flux et pour convertir le paquet de données en un flux (152) binaire continu lorsque les informations (450) de commande de flux indiquent que le récepteur (408, 502) DSL est capable de recevoir la RU (156).

12. Procédé permettant la mise en oeuvre d'une commande de flux de contre-pression à distance dans un système de communication par ligne d'abonné numérique, DSL, comprenant :
la fourniture, par un récepteur (408, 502) DSL, d'informations (450) de commande de flux pour indiquer si le récepteur (408, 502) DSL est capable de recevoir un paquet de données ;
la transmission, par le récepteur (408, 502) DSL, d'un message (452) d'accusé de réception à un émetteur (402) DSL pour comprendre les informations (450) de commande de flux, d'un accusé de réception de réception d'une unité de retransmission, RU, et d'un accusé de réception des RU (156) qui ont été reçues ;
la réception, par l'émetteur (402) DSL, du message (452) d'accusé de réception ; et
la transmission, par l'émetteur (402) DSL, d'une seconde RU (156) au récepteur (408, 502) DSL lorsque le récepteur (408, 502) DSL est capable de recevoir le paquet de données.

13. Procédé selon la revendication 12, comprenant en outre :
la réception, par le récepteur (408, 502) DSL, de la seconde RU (156) sur une liaison de communication ;
la conversion, par le récepteur (408, 502) DSL, de la RU (156) en un flux binaire continu (152) ; et
le traitement, par le récepteur (408, 502) DSL, du flux binaire continu (152) pour fournir le paquet de données.

14. Procédé selon la revendication 12 ou 13, comprenant en outre :
la conversion, par l'émetteur (402) DSL, d'un paquet de données en un flux (152) binaire continu lorsque le récepteur (408, 502) DSL est capable de recevoir le paquet de données ; et
le traitement, par le récepteur (408, 502) DSL, du flux (152) binaire continu pour fournir la seconde RU (156).

15. Procédé selon l'une quelconque des revendications 12 à 14, comprenant en outre :
la fourniture, par le récepteur (408, 502) DSL, du paquet de données à un dispositif (318, 320, 322, 324) de communication ou à un réseau (206) à une première vitesse, et dans lequel la transmission de la seconde RU (156) comprend :
la transmission de la seconde RU (156) à une seconde vitesse, la seconde vitesse étant inférieure à la première vitesse.
